# EUROPEAN PATENT APPLICATION

(11) **EP 1 790 897 A1**
(43) Date of publication of application: **30.05.2007**
(21) Application number: 06124761.5
(22) Date of filing: 24.11.2006
(51) Int. Cl.: F16L 23/16

(54) **Connecting system for pneumatic circuits to facilitate leak detection**

(30) Priority: 28.11.2005 IT TO20050838
(71) Applicant: Faiveley Transport Italia S.p.A., 10045 Piossasco TO (IT)
(72) Inventor: Carpignano, Claudio, I-10040, Piobesi Torinese (Torino) (IT); Barberis, Dario, I-10137, Torino (IT)
(74) Representative: Quinterno, Giuseppe

(57) **Abstract**

The system can be used for connecting two parts of a pneumatic circuit, each comprising at least one pneumatic pipe (1) which opens into an opening (2) formed in a flat end flange (3) intended for tightening, with at least one interposed annular gasket (4), onto the corresponding flat end flange (3) of the other part. At least one of said end flanges (3) is provided with:
- a first groove (5) which takes the shape of a closed line enclosing the opening (2) of said at least one pipe (1); and
- at least a second groove (6) which extends between the first groove (5) and a predetermined point on the edge of the respective flange (3).

The system is such that a leakage flow from said opening of the pipe is capable of flowing into the first groove (5) and escaping from the connection through the second groove (6).

## Description

The present invention relates to a connecting system for pneumatic circuits, such as pneumatic braking systems for railway applications. In the present description and in the following claims the expression "pneumatic circuits" is intended to mean circuits for air or gaseous fluids in general.

More specifically, the invention relates to a system for connecting two parts of a pneumatic circuit according to the preamble of Claim 1.

Testing the leaktightness of the connections between pressurized pneumatic pipes can be carried out by using suitable foaming aqueous solutions: after pressurizing the circuit, the solution is distributed all the way around the perimeter of the connection, and any leaks are detected by the formation of small bubbles. This method can be difficult to execute since it is not always possible to distribute the solution all the way around the connection, particularly when a part of it is concealed from view or is difficult to access or even inaccessible.

Any loss of connection between pneumatic circuits can also be detected, not only with the foaming solution, but also by using sensors which are sensitive to a marker (ionic, radioactive, coloured charge, ...) carried in the fluid.

An object of the present invention is to provide a connecting system suitable for enabling fast and easy detection of air leaks (or other gaseous fluid) even in the case of a connection partially concealed from view.

These and other objects are achieved according to the invention by a system, the main features of which are defined in Claim 1.

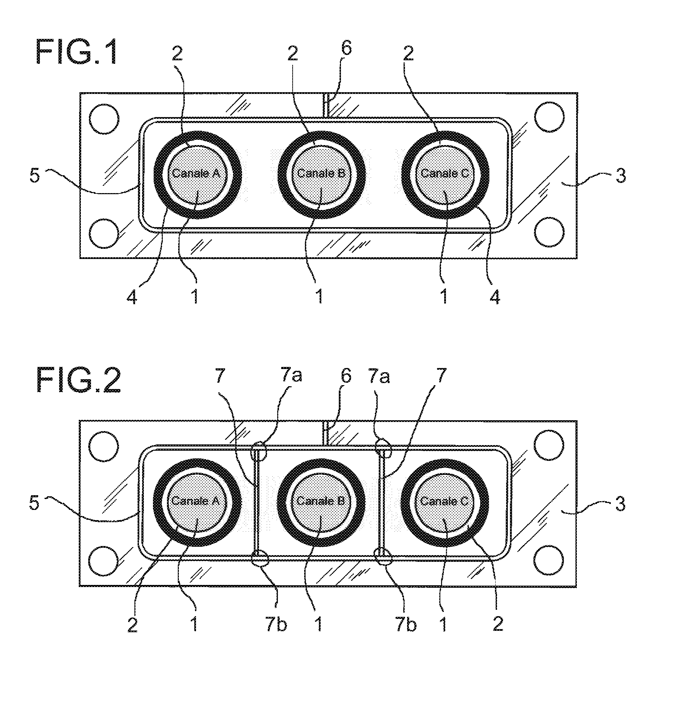

Further features and advantages of the invention will emerge from the following detailed description, provided purely by way of a non-limiting example, with reference to the accompanying drawings, in which Figures 1 to 4 are front views of a flange of four embodiments of a system according to the invention.

Figure 1 is a general view of an flat end flange 3 of a portion of a pneumatic circuit, intended for tightening, with one or more interposed annular gaskets 4, onto a corresponding flat end flange of a second portion of the pneumatic circuit.

On flange 3 there are three openings 2 of three pneumatic pipes 1 enclosed by respective annular gaskets 4.

According to a first embodiment, these openings 2 are together enclosed by a first groove 5 which takes the shape of a closed line; the first groove 5 is connected, by way of a second groove 6, to a predetermined and easily accessible point on the edge of flange 3.

Any leakage flow from any opening 2 is collected by the first groove 5 and escapes through the second groove 6. In this way, in order to check for any leaks, it is sufficient to distribute the foaming solution only over the outlet of the second groove 6 and check for any bubble formation.

Figure 2 shows a flange 3 in which, in a second embodiment of the invention, a groove 5 is made which encloses the whole of the three pipes 1. A further two additional guard grooves 7 which join groove 5 at two points 7a and 7b are made between the pipes 1. In this way, each opening 2 of each pipe 1 is completely enclosed by an external groove formed by the joining of parts of groove 5 with one of the additional grooves 7. The additional grooves 7 are provided to separate the various openings 2 from one another, so as to prevent a leak from one of the pneumatic pipes from reaching the adjacent pneumatic pipe, thus possibly resulting in nondetection of the leak, and malfunctions.

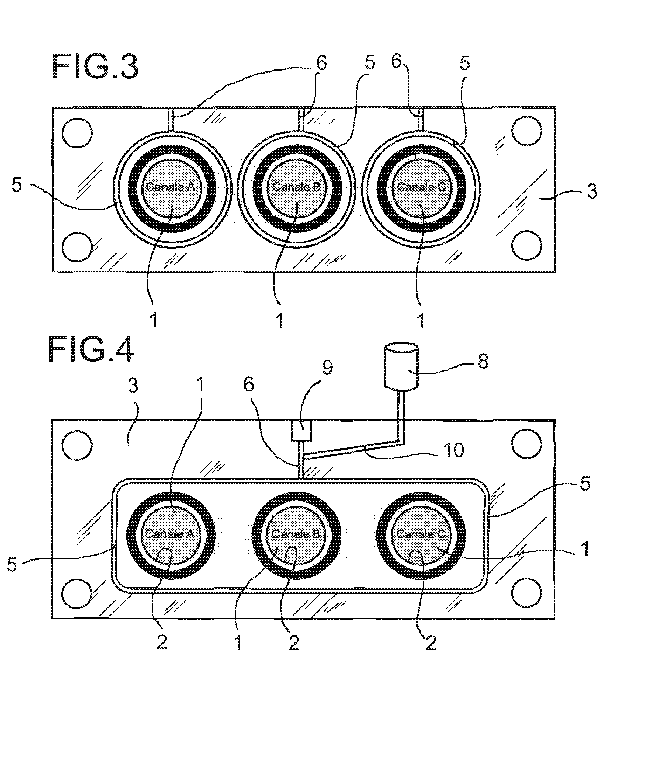

Figure 3 shows a variant of the embodiment in which a flange 3 is connected to three pipes 1, each enclosed by a respective annular groove 5. Each groove 5 is connected to a respective second groove 6 which connects it to a predetermined and easily accessible point on the edge of flange 3. This embodiment of the invention allows unambiguous identification of the defective pneumatic seal by using the known foaming solution at the outlet of each second groove 6.

Figure 4 shows a flange 3 in which the three pipes 1 are enclosed by a single groove 5 connected to a single second groove 6, as shown in the embodiment according to Figure 1. In Figure 4 a suitable channel 10, connected to a pressure sensor 8, is connected to said second groove 6. The second groove 6, on the other hand, ends in a seat located in flange 3 which houses a pneumatic valve 9, which is normally shut.

Due to the presence of valve 9, any air leaks create an appropriate excess pressure inside groove 6 which is detected by sensor 8. The involvement of valve 9, set to a given pressure value, aims to prevent the leak from becoming uncontrollable, the air from being discharged from said grooves and the pressure between the connecting flanges from reaching an unwanted value. The automatic leak detection system described in Figure 4 can, of course, also be used in any of the three embodiments of the invention shown in Figures 1 to 3.

Obviously, without departing from the principle of the invention, the embodiments and constructional details may vary considerably from those described and illustrated purely by way of a non-limiting example, without thereby departing from the scope of the invention as defined in the accompanying claims.

## Claims

1. System for connecting two portions of a pneumatic circuit, each comprising at least one pneumatic pipe (1) which opens into an opening (2) formed in a flat end flange (3) intended for tightening, with at least one interposed annular gasket (4), onto the corresponding flat end flange (3) of the other portion; the connecting system being **characterized in that** at least one of said end flanges (3) is provided with:
- a first groove (5) which takes the shape of a closed line enclosing the opening (2) of said at least one pipe (1); and
- at least a second groove (6) which extends between the first groove (5) and a predetermined point on the edge of the respective flange (3);
the system being such that a leakage flow from said opening of the pipe is capable of flowing into the first groove (5) and escaping from the connection through the second groove (6).

2. System according to Claim 1 comprising a plurality of additional guard grooves (7) which are formed between the openings (2) of the pipes (1), and which join two spaced-apart points of said first groove (5) in such a way that each opening (2) of the pipes (1) is completely enclosed by an outer groove which extends along a closed line and is made by joining together portions of the first groove (5) and at least one of said additional grooves (7).

3. System according to Claim 1 in which each opening (2) of the various pipes (1) is enclosed by a respective first groove (5) connected to the edge of the respective flange (3) by way of a respective second groove (6).

4. System according to any of the preceding claims, comprising automatic leak detection means (8).

5. System according to Claim 4 in which the leak detection means essentially comprise a pressure sensor (8) connected to a measuring instrument.

6. System according to Claim 4 or 5 in which the second groove (6) is provided, on the exit towards the edge of the flange (3), with a pneumatic valve (9) which is capable of opening as a result of a predetermined excess pressure.
